# EUROPÄISCHE PATENTSCHRIFT

(11) **EP 0 862 851 B1**
(45) Veröffentlichungstag und Bekanntmachung des Hinweises auf die Patenterteilung: **26.06.2002**
(21) Anmeldenummer: 98100655.4
(22) Anmeldetag: 16.01.1998
(51) Int. Cl.: A01F 15/08

(54) **Verfahren und Vorrichtung zur Feineinstellung von Bewegungsabläufen an Grossballenpressen**
Method and device for the fine adjustment of synchronized movement in large bale presses
Méthode et appareil pour l'ajustement fin du mouvement synchronisé pour presses à grandes balles

(30) Priorität: 08.03.1997 DE 19709604
(43) Veröffentlichungstag der Anmeldung: 09.09.1998
(73) Patentinhaber: Usines Claas France S.A., 57140 St. Remy / Woippy (FR)
(72) Erfinder: Hawlas, Martin, 33428 Harsewinkel (DE)
(74) Vertreter: Weeg, Thomas

(56) Entgegenhaltungen:
- DE-A- 3 730 732

## Beschreibung

Die Erfindung bezieht sich auf ein Verfahren zur Feineinstellung von Bewegungsabläufen an Großballenpressen, insbesondere für die Einstellung des Einstichpunktes der Bindenadeln und die Steuerung des Zubringers für das Preßgut, sowie eine Großballenpresse nach den Oberbegriffen der Patentansprüche 1,5 und 6.

Zur Gewährleistung einer störungsfreien Arbeitsweise sowie zu Vermeidung von Schäden an den Funktionsbaugruppen von Großballenpressen ist eine exakte Zuordnung der Bewegungsabläufe zwischen Zubringer, Preßkolben, Bindenadeln und Knotern erforderlich. Um die Voraussetzungen dafür zu schaffen, ist eine Einstellung der bewegungsabhängigen Elemente sowohl bei der Maschinenmontage als auch nach bestimmten Einsatzzeiten notwendig. Bei den bekannten Großballenpressen erfolgt das Einstellen des synchronen Zusammenwirkens über bestimmte Markierungen, die an den einzelnen Antriebselementen oder an anderen Bauteilen angebracht sind. Diese Markierungen müssen in bestimmten Positionen eine vorgeschriebene Lage zueinander einnehmen. Bei Einhaltung der Einstellvorschriften wird der Bewegungsablauf der einzelnen Funktionselemente koordiniert. Da diese Zuordnung jedoch nicht in allen Fällen für eine optimale Funktionsfähigkeit ausreichend ist, sind darüberhinaus noch weitere Feineinstellvorrichtungen erforderlich, die insbesondere beim Auftreten von Toleranz- und Verschleißerscheinungen zum Einsatz kommen. Besonders bei Antrieben der Knoterwelle mittels Rollenkette ist infolge der nach längerem Einsatz auftretenden Verschleißerscheinungen der Antriebselemente eine Einstellkorrektur notwendig.

Aus der DE 37 30 732 A1 ist beispielsweise eine Feineinstellung zwischen Preßkolben und Bindenadeln bekannt, bei der die Spannung der Rollenkette durch eine Spann- und Verstelleinrichtung eingestellt und das angetriebene Kettenrad auf der Knoterwelle etwas verdreht und damit die Stellung der Nadelspitzen zum Preßkolben verändert wird. Solche Verstelleinrichtungen erfordern jedoch einen zusätzlichen Aufwand. Außerdem garantieren Rollenkettenantriebe keine exakten Übertragungsverhältnisse. Auch die weiterhin bekannten höherwertigeren Übertragungselemente, wie Zahnräder, Getriebe und Gelenkwellen ermöglichen zwar genauere Zuordnungen der Funktionselemente zueinander, erfordern jedoch ebenfalls aufwendige Feineinstellvorrichtungen.

Der Erfindung liegt die Aufgabe zugrunde, die Feineinstellung von Bewegungsabläufen mit einem geringen Aufwand und einer hohen Präzision vornehmen zu können.

Erfindungsgemäß wird diese Aufgabe durch die in den Schutzansprüchen 1, 5 und 6 genannten Merkmale gelöst. Vorteilhafte Ausgestaltungen sind Gegenstand der weiteren Ansprüche. Die erfindungsgemäße Lösung ermöglicht mit einem geringen Bedienungs- und Herstellungsaufwand eine exakte Synchronisierung der einzelnen Bewegungsabläufe der Funktionselemente zueinander. Damit wird eine optimale Funktionsweise der Großballenpresse sowie die Vermeidung von Störungen und Schäden an den Bauteilen erreicht. Auch wird die Feineinstellung nach der Reparatur oder dem Austausch von Antriebskomponenten erleichtert.

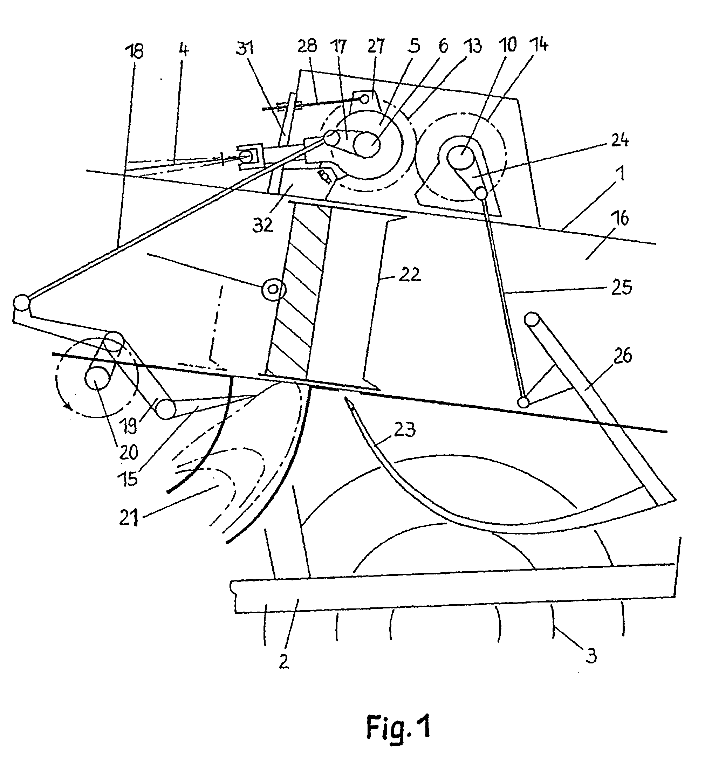

Die Erfindung wird nachstehend an einem Ausführungsbeispiel näher erläutert. In der zugehörigen Zeichnung zeigen
- Figur 1: eine Seitenansicht des Antriebsschemas für den Zubringer und die Bindenadeln,

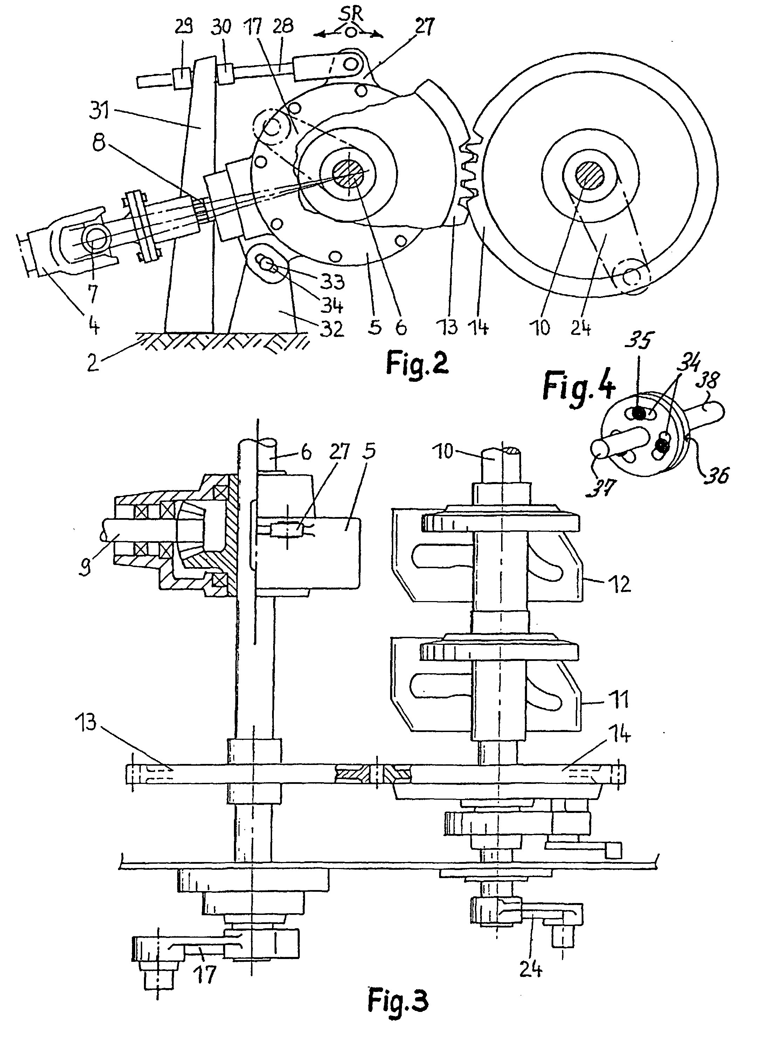

- Figur 2: eine Seitenansicht des Knotervorgeleges mit der Feineinstellvorrichtung,
- Figur 3: eine Draufsicht auf das Knotervorgelege mit den Antrieben für den Zubringer die Bindenadeln,
- Figur 4: eine Ansicht einer verdrehbaren Flanschstelle einer Antriebswelle.

Eine Großballenpresse 1 nimmt über eine Pickup-Einrichtung Erntegut auf, fördert es mithilfe eines Zubringers 15 in den Preßkanal 16, wo es von einem Preßkolben zu einem Erntegutstrang verdichtet wird. Durch das Abbinden einzelner Gutportionen durch die Bindevorrichtung entstehen aus dem Erntegutstrang einzelne Großballen, die von der Großballenpresse auf das Feld abgegeben werden und von dort aus mit anderen Transportmitteln weitertransportierbar sind. Für die einzelnen Arbeitsorgane sind aus dem Stand der Technik eine Vielzahl von Abwandlungen bekannt, so beispielsweise für den Zubringer ein oder mehrere kurvenbahngesteuerte Raffer, ein oder mehrere Rotationsförderer mit mehreren Zinkenreihen oder gesteuerten Fingern, oder fiir den Preßkolben der oszillierend angetrieben sein oder aus einer rotierenden Schnecke bestehen kann, die jedoch für die vorliegende Erfindung nicht von weiterem Interesse sind, weil der Erfindungsgegenstand auf alle Abwandlungen übertragbar ist:

Der Antrieb der einzelnen Arbeitsorgane einer Großballenpresse erfolgt regelmäßig über ein Hauptgetriebe, von dem aus die Antriebe der einzelnen Arbeitsorgane direkt oder mittelbar abgeleitet sind. Im gezeigten Ausführungsbeispiel wird von einem in der Zeichnung nicht näher dargestellten Hauptgetriebe einer Großballenpresse 1 mit einem Pressenrahmen 2 und mit Laufrädern 3 über eine Gelenkwelle 4 und ein Winkelgetriebe 5 eine Vorgelegewelle 6 angetrieben. Das obere Kreuzgelenk 7 der Gelenkwelle 4 ist mittels einer Wellen-Längsverzahnung 8 lösbar mit der Eingangswelle 9 des Winkelgetriebes 5 verbunden. Das Winkelgetriebe 5 ist auf der Vorgelegewelle 6 angeordnet und ist drehfest mit dieser verbunden. Parallel zur Vorgelegewelle 6 verläuft in einem Abstand eine Knoterwelle 10, auf der die Knoter 11, 12 angeordnet sind. Auf der Vorgelegewelle 6 und auf der Knoterwelle 10 ist je ein Stirnrad 13, 14 drehfest angebracht, die miteinander in Eingriff stehen. Durch die Stirnräder 13, 14 wird die Drehbewegung von der Vorgelegewelle 6 auf die Knoterwelle 10 übertragen.

Von der Vorgelegewelle 6 aus erfolgt auch der Antrieb des Zubringers 15 für das Preßgut in den Preßkanal 16. Hierzu ist an einem Ende der Vorgelegewelle 6 ein Kurbelarm 17 befestigt, der die Kurbelbewegung über eine Steuerstange 18 und einen Kurbelhebel 19 auf eine umlaufende Zubringerwelle 20 überträgt. Mit dem Kurbelhebel 19 ist der Zubringer 15 verbunden. Durch dessen periodisch gesteuerte Umlaufbahn wird das Preßgut aus dem Zuführkanal 21 in Abhängigkeit von der Bewegung des Preßkolbens 22 in den Preßkanal 16 gefördert. Von der Knoterwelle 10 wird der Antrieb der Bindenadeln 23 abgeleitet. Die Antriebsübertragung erfolgt dabei über eine auf der Knoterwelle 10 befestigte Kurbel 24, eine Zugstange 25 und einen Schwingarm 26, an dem die Bindenadeln 23 angeordnet sind. Damit der Bindevorgang des Preßballens zum optimalen Zeitpunkt erfolgen kann, sind die Bewegungen des Preßkolbens 22 und der Bindenadeln 23 miteinander synchronisiert. Die Einstellung hierfür geschieht beim Montagevorgang der Großballenpresse 1, indem die bewegungsabhängigen Funktionsbaugruppen so zueinander positioniert werden, daß ihr synchrones Zusammenwirken im wesentlichen gewährleistet ist. Nach dieser Einstellung wird die Gelenkwelle 4 mit dem Winkelgetriebe 5 gekoppelt und fest verbunden. Da die hierdurch erzielte antriebsmäßige Verbindung jedoch nicht für den erforderlichen genauen Bewegungsablauf aller Funktionsbaugruppen zueinander ausreichend ist, ist noch eine zusätzliche Feineinstellung notwendig. Insbesondere betrifft dies den Einstichpunkt der Bindenadeln 23 und die Steuerung des Zubringers 15 im Zuführkanal 21. Diese Feineinstellung erfolgt dadurch, indem das auf der Vorgelegewelle 6 angeordnete Winkelgetriebe 5 um maximal 10 °, vorzugsweise 2° bis 3° in beide Umfangsrichtungen verschwenkbar angeordnet ist. Die Schwenkverstellung in die beiden Schwenkrichtungen SR des Winkelgetriebes 5 geschieht über eine an einer Halterung 27 des Getriebegehäuses gelenkig befestigten Drehmomentstütze 28, die mit einem Gewinde versehen ist. Mittels Einstellmuttern 29, 30 wird die Lage der Drehmomentstütze 28 in bezug auf eine mit dem Pressenrahmen 2 fest verbundene Konsole 31 eingestellt und damit die jeweils erforderliche Schwenklage des Winkelgetriebes 5 erzielt. Während der Schwenkverstellung des Winkelgetriebes 5 wird die Eingangswelle 9 des Winkelgetriebes 5 von der Gelenkwelle 4 gegen eine Verdrehung gesichert, so daß sich die Verstellbewegung auf die Vorgelegewelle 6 und über die beiden Stirnräder 13, 14 auf die Knoterwelle 10 überträgt. Die Positionsstellungen der Bindenadeln 23 und der Zubringer 15 können somit nach ihren Erfordernissen fein eingestellt werden. Im unteren Bereich wird das Winkelgetriebe 5 an einer ebenfalls mit dem Pressenrahmen 2 verbundenen Stütze 32 zusätzlich in seiner eingestellten Lage gesichert. Dies erfolgt über eine mit der Stütze 32 und dem Getriebegehäuse verbundenen Arretierschraube 33, die innerhalb einer Langlochführung 34 lös- und feststellbar angeordnet ist.

Auch wenn abweichend vom erläuterten Ausführungsbeispiel der Zubringer 15 und die Knoterwelle 10 nicht direkt miteinander über eine Vorgelegewelle 6, sondern nur mittelbar über weitere zwischengeschaltete Antriebselemente oder anders abgeleitete Antriebe in ihrem Bewegungsablauf zueinander eingestellt sind, läßt sich das erläuterte Prinzip der Winkelverdrehung über die Verdrehung eines Winkelgetriebes sinngemäß anwenden. Das Prinzip läßt sich anwenden, indem entweder ein dem Zubringer 15 zugeordnetes Winkelgetriebe oder dem Knoterantrieb zugeordnetes Winkelgetriebe oder beide Winkelgetriebe um einen Korrekturwinkel verschwenkbar angeordnet sind.

Eine entsprechende Korrektur bzw. Feineinstellung läßt sich auch erzielen, wenn zumindest eine Antriebswelle, die eine Antriebskraft auf eines der aufeinander abzustimmenden Arbeitsorgane überträgt, eine Flanschstelle aufweist, an der die durch die Flanschverbindung miteinander drehfest verbundenen Antriebswellenteile zueinander verdrehbar sind. Ein Ausführungsbeispiel ist dazu in Figur 4 gezeigt. Ein Schraubbolzen 35 ist fest mit einer Flanschfläche 36 verbunden und durch sich in Verdrehrichtung erstreckende Langlöcher 34 hindurchgeführt. Der Antriebswellenstummel 37 ist nun relativ zum Antriebswellenstummel 38 um daß Längenmaß der Langlöcher 34 verdrehbar. Ist der Antriebswellenstummel 37 nun in gewünschter Weise zum Antriebswellenstummel 38 verdreht, kann die Flanschverbindung an der Flanschstelle durch Anziehen von Schrauben auf den Schraubbolzen 35 lagefixiert werden.

### Bezugszeichenaufstellung

- 1 -: Großballenpresse
- 2 -: Pressenrahmen
- 3 -: Laufräder
- 4 -: Gelenkwelle
- 5 -: Winkelgetriebe
- 6 -: Vorgelegewelle
- 7 -: Kreuzgelenk
- 8 -: Längsverzahnung
- 9 -: Eingangswelle
- 10 -: Knoterwelle
- 11,12 -: Knoter
- 13,14 -: Stirnrad
- 15 -: Zubringer
- 16 -: Preßkanal
- 17 -: Kurbelarm
- 18 -: Steuerstange
- 19 -: Kurbelhebel
- 20 -: Zubringerwelle
- 21 -: Zufiihrkanal
- 22 -: Preßkolben
- 23 -: Bindenadeln
- 24 -: Kurbel
- 25 -: Zugstange
- 26 -: Schwingarm
- 27 -: Halterung
- 28 -: Drehmomentstütze
- 29,30 -: Einstellmuttern
- 31 -: Konsole
- 32 -: Stütze
- 33 -: Arretierschraube
- 34 -: Langlochführung
- 35 -: Schraubbolzen
- 36 -: Flanschfläche
- 37 -: Antriebswellenstummel
- 38 -: Antriebswellenstummel
- SR -: Schwenkrichtung

## Patentansprüche

1. Verfahren zur Feineinstellung von Bewegungsabläufen an Großballenpressen, insbesondere für die Synchronisierung des Einstechens der Bindenadeln und der Steuerung des Zubringers für das Preßgut, wobei mit dem Hauptgetriebe die Knoterwelle über zumindest ein Winkelgetriebe antriebsverbunden ist und der Antrieb fiir die Bindenadeln von der Knoterwelle abgeleitet ist, und wobei der Zubringer mit dem Hauptgetriebe antriebsverbunden ist,
dadurch gekenn zeichnet,
daß die Feineinstellung durch ein Schwenken des Winkelgetriebes (5) um einen Schenkelwinkel in eine der beiden Schwenkrichtungen (SR) erfolgt.

2. Verfahren nach Anspruch 1,
**dadurch gekennzeichnet,**
**daß** das Verschwenken um einen maximalen Schenkelwinkel von bis zu 10° in eine der beiden Schwenkrichtungen (SR) erfolgt.

3. Verfahren nach Anspruch 1 oder 2,
**dadurch gekennzeichnet,**
**daß** nur der Zubringer (15) über zumindest ein Winkelgetriebe (5) mit dem Hauptgetriebe antriebsverbunden ist und die Feineinstellung durch ein Schwenken des Winkelgetriebes (5) um einen Schenkelwinkel in eine der beiden Schwenkrichtungen (SR) erfolgt.

4. Verfahren nach einem der Ansprüche 1 bis 3,
**dadurch gekennzeichnet,**
**daß** Zubringer (15) und Knoterwelle (10) über jeweils zumindest ein Winkelgetriebe (5) mit dem Hauptgetriebe antriebsverbunden sind und die Feineinstellung durch ein Schwenken zumindest eines der Winkelgetriebe um einen Schenkelwinkel (SR) erfolgt.

5. Verfahren zur Feineinstellung von Bewegungsabläufen in Großballenpressen, insbesondere für die Synchronisierung des Einstechens der Bindenadeln und der Steuerung des Zubringers für das Preßgut, wobei die Antriebskräfte über Wellen auf die Arbeitsorgane übertragen werden,
**dadurch gekennzeichnet,**
**daß** die Feineinstellung durch Verdrehen zumindest einer fixierbaren Flanschstelle einer Antriebswelle (37, 38) zu den zu synchronisierenden Arbeitsorganen entlang in Verdrehrichtung angeordneter, die Flanschstelle fixierender Langlöcher (34) erfolgt.

6. Großballenpresse mit Vorrichtung zur Feineinstellung von Bewegungsabläufen, insbesondere für die Synchronisierung des Einstechens der Bindenadeln und der Steuerung des Zubringers für das Pressgut, wobei mit dem Hauptgetriebe die Knoterwelle über zumindest ein Winkelgetriebe antriebsverbunden ist und der Antrieb für die Bindenadeln von der Knoterwelle abgeleitet ist, und wobei der Zubringer mit dem Hauptgetriebe antriebsverbunden ist,
**dadurch gekennzeichnet,**
**dass** das Winkelgetriebe (5) gemeinsam mit der Vorgelegewelle (6) schwenkverstellbar ist.

7. Großballenpresse nach Anspruch 6,
**dadurch gekennzeichnet,**
**dass** nur der Zubringer (15) über zumindest ein Winkelgetriebe (5) mit dem Hauptgetriebe antriebsverbunden ist und schwenkverstellbar angeordnet ist.

8. Großballenpresse nach einem der Ansprüche 6 oder 7,
**dadurch gekennzeichnet,**
**dass** zwischen dem Winkelgetriebe (5) und einer fest mit dem Pressenrahmen (2) verbundenen Konsole (31) eine mit einem Gewinde und mit Einstellmuttem (29, 30) versehene Drehmomentenstütze (28) angeordnet ist.

9. Großballenpresse nach einem der Ansprüche 6 bis 8,
**dadurch gekennzeichnet,**
**dass** unterhalb des Winkelgetriebes (5) eine mit dem Pressenrahmen (2) verbundene Stütze (32) angeordnet ist, die über eine lös- und feststellbare Arretierschraube (33) mit dem Gehäuse des Winkelgetriebes (5) verbunden ist.

## Claims

1. A method of fine adjustment of sequences of movements on big bale presses, in particular for synchronisation of insertion of the binding needles and control of the feed arrangement for the material being pressed, wherein the knotter shaft is drivingly connected to the main transmission by way of at least one angle transmission and the drive for the binding needles is derived from the knotter shaft and wherein the feed arrangement is drivingly connected to the main transmission, **characterised in that** fine adjustment is effected by pivotal movement of the angle transmission (5) through a pivotal angle in one of the two pivotal directions (SR).

2. A method according to claim 1 **characterised in that** the pivotal movement is effected through a maximum pivotal angle of up to 10° in one of the two pivotal directions (SR).

3. A method according to claim 1 or claim 2 **characterised in that** only the feed arrangement (15) is drivingly connected by way of at least one angle transmission (5) to the main transmission and fine adjustment is effected by a pivotal movement of the angle transmission (5) through a pivotal angle in one of the two pivotal directions (SR).

4. A method according to one of claims 1 to 3 **characterised in that** the feed arrangement (15) and the knotter shaft (10) are drivingly connected to the main transmission by way of at least one respective angle transmission (5) and fine adjustment is effected by a pivotal movement of at least one of the angle transmissions through a pivotal angle (SR).

5. A method of fine adjustment of sequences of movements on big bale presses, in particular for synchronisation of insertion of the binding needles and control of the feed arrangement for the material being pressed, wherein the drive forces are transmitted to the working members by way of shafts, **characterised in that** fine adjustment is effected by rotation of at least one fixable flange location of a drive shaft (37, 38) in relation to the working members to be synchronised along slots (34) which are arranged in the direction of rotation and which fix the flange location.

6. A big bale press with a device for fine adjustment of sequences of movements, in particular for synchronisation of insertion of the binding needles and control of the feed arrangement for the material being pressed, wherein the knotter shaft is drivingly connected to the main transmission by way of at least one angle transmission and the drive for the binding needles is derived from the knotter shaft and wherein the feed arrangement is drivingly connected to the main transmission, **characterised in that** the angle transmission (5) is pivotably displaceable jointly with the countershaft (6).

7. A big bale press according to claim 6 **characterised in that** only the feed arrangement (15) is drivingly connected to the main transmission by way of at least one angle transmission (5) and arranged to be pivotably displaceable.

8. A big bale press according to one of claims 6 and 7 **characterised in that** arranged between the angle transmission (5) and a bracket (31) connected fixedly to the press frame (2) is a torque support (28) provided with a screwthread and with adjustment nuts (29, 30).

9. A big bale press according to one of claims 6 to 8 **characterised in that** arranged beneath the angle transmission (5) is a support (32) which is connected to the press frame (2) and which is connected to the housing of the angle transmission (5) by way of a releasable and lockable arresting screw (33).

## Revendications

1. Procédé pour le réglage fin de mouvements dans des presses à grosses balles, en particulier pour la synchronisation du piquage des aiguilles de liage et de la commande de l'ameneur pour le produit compressé, l'arbre des noueurs étant lié en entraînement à la boîte de vitesses principale par l'intermédiaire d'au moins un couple conique et l'entraînement pour les aiguilles de liage étant dérivé de l'arbre des noueurs, et l'ameneur étant lié en entraînement à la boîte de vitesses, **caractérisé en ce que** le réglage fin a lieu par un pivotement du couple conique (5) d'un angle de pivotement dans l'une des deux directions de pivotement (SR).

2. Procédé selon la revendication 1, **caractérisé en ce que** le pivotement a lieu suivant un angle maximal de pivotement allant jusqu'à 10° dans l'une des deux directions de pivotement (SR).

3. Procédé selon la revendication 1 ou 2, **caractérisé en ce que** seul l'ameneur (15) est lié en entraînement à la boîte de vitesses principale par l'intermédiaire d'au moins un couple conique (5) et le réglage fin a lieu par un pivotement du couple conique (5) d'un angle de pivotement, dans une des deux directions de pivotement (SR).

4. Procédé selon une des revendications 1 à 3, **caractérisé en ce que** l'ameneur (15) et l'arbre des noueurs (10) sont liés en entraînement à la boîte de vitesses principale par l'intermédiaire chacun d'au moins un couple conique (5) et le réglage fin a lieu par pivotement d'un angle de pivotement (SR), d'au moins un des couples coniques.

5. Procédé pour le réglage fin de mouvements dans des presses à grosses balles, en particulier pour la synchronisation du piquage des aiguilles de liage et de la commande de l'ameneur pour le produit compressé, les forces d'entraînement étant transmises aux organeS de travail par l'intermédiaire d'arbres, **caractérisé en ce que** le réglage fin a lieu par rotation d'au moins un accouplement à brides blocable d'un arbre d'entraînement (37, 38) par rapport aux organes à synchroniser, dans des trous oblongs (34) disposés dans la direction de rotation qui bloquent l'accouplement.

6. Presse à grosses balles munie d'un dispositif pour le réglage fin de mouvements, en particulier pour la synchronisation du piquage des aiguilles de liage et de la commande de l'ameneur, l'arbre des noueurs étant lié en entraînement à la boîte de vitesses principale par l'intermédiaire d'au moins un couple conique et l'entraînement pour les aiguilles de liage étant dérivé de l'arbre des noueurs, et l'ameneur étant lié en entraînement à la boîte de vitesses principale, **caractérisée en ce que** le couple conique (5) avec l'arbre intermédiaire (6) est réglable en rotation.

7. Presse à grosses balles selon la revendication 6, **caractérisée en ce que** seul l'ameneur (15) est lié en entraînement à la boîte de vitesses principale par l'intermédiaire d'au moins un couple conique (5) et est monté avec possibilité de réglage par pivotement.

8. Presse à grosses balles selon une des revendications 6 ou 7, **caractérisée en ce qu'**un dispositif anti-rotation (28) comportant un filetage et des écrous de réglage (29, 30) est disposé entre le couple conique (5) et une console (31) solidaire du châssis de presse (2).

9. Presse à grosses balles selon une des revendications 6 à 8, **caractérisée en ce qu'**au-dessous du couple conique (5) est disposé un appui (32) lié au châssis de presse (2), qui est lié au carter du couple conique (5) par l'intermédiaire d'une vis de blocage (33) desserrable et blocable.
